# EUROPEAN PATENT SPECIFICATION

(11) **EP 1 679 624 B1**
(45) Date of publication and mention of the grant of the patent: **27.07.2011**
(21) Application number: 06250062.4
(22) Date of filing: 06.01.2006
(51) Int. Cl.: G06F 17/30, H04L 29/08, G06F 15/173

(54) **Remotely accessible integrated subsystems for parallel computing in an aircraft**
Fernzugreifbare, integrierte Untersysteme für paralleles Rechnen in einem Flugzeug
Sous-Systèmes intégrés, accessible à distance pour traitement parallèle dans un avion

(30) Priority: 07.01.2005 US 30783
(43) Date of publication of application: 12.07.2006
(73) Proprietor: United Technologies Corporation, Hartford, CT 06101 (US)
(72) Inventor: Loda, David C., Bolton, CT 06043 (US); Brown, Rork S., Stafford Springs, CT 06076 (US)
(74) Representative: Leckey, David Herbert

(56) References cited:
- WO-A-03/098378
- US-A- 5 111 402
- US-A1- 2002 045 484
- US-A1- 2002 198 932
- US-A1- 2003 009 761
- US-A1- 2004 206 818
- US-B1- 6 418 462
- US-B1- 6 832 380

## Description

### FIELD OF THE INVENTION

The present disclosure relates to remote integrated subsystems, and more particularly to a plurality of microserver subsystems networked with a master microserver in an aircraft or the like.

### BACKGROUND OF THE INVENTION

Complex structures such as aircraft, office buildings, power plants, and the like are known to have microservers installed in selected subsystems. Typically, these subsystem microservers are connected to input devices, output devices, and control devices that operate with each microserver within the particular subsystem. For example, U.S. Patent No. 7,167,788 discloses an integrated system for monitoring a deployed product on a movable platform, gathering data about the deployed product, and disseminating the data about the deployed product. The system includes a server located on the movable platform capable of communication with the server from a remote location. The server communicates with a source of data about the deployed product. The system further includes a portal onto which data gathered by the server may be downloaded and with which one can upload information to the server. The system includes a dual architecture card which may be mounted in an electronic controller of the deployed product. The dual architecture card may include a closed architecture section executing proprietary software, and an open architecture receiving processed data from the closed architecture section through a secured connection. One or both of the closed architecture section and closed architecture section may include a microserver.

WO 03/098378 describes a method for controlling an in-flight entertainment system and the independent claims are characterised over this document.

US 2002/0045484 describes a video game distribution network.

US 2003/0009761 describes a mobile wireless local area network and related methods.

US 5111402 describes an integrated aircraft test system.

US 2004/0206818 describes an engine mounted microserver.

An improvement to the communication infrastructure and expanded use of subsystem microservers for customer entertainment and the like are contemplated by the present disclosure.

### SUMMARY OF THE DISCLOSURE

According to a first aspect of the present invention there is provided a communication system as claimed in claim 1.

The communication system includes a master microserver with a master microserver card and at least one subsystem microserver with a subsystem microserver card are operationally coupled to one another. A remotely accessible communication network is formed between the master microserver and the at least one subsystem microserver. The network is operable for providing a real time closed feedback communication loop between each subsystem microserver and the master microserver. Both the master microserver and the subsystem microservers can preferably be accessed through wireless transmission.

In another aspect of the present invention, there is provided an aircraft as claimed in claim 19. The electronic communications system of the aircraft may include a plurality of microservers connected together by a communication network. The second subsystem microserver can be positioned on passenger seats of the aircraft for passengers to access the internet, play interactive games or the like. The second subsystem microserver preferably includes a monitor operationally associated therewith. An input device such as a keyboard, mouse, or touch screen is operably connected with the second subsystem microserver. The microservers can be linked to form a massively parallel supercomputer.

The massively parallel supercomputer is operable for providing computations for such things as weather predictions, collision avoidance radar, engine maintenance, system analysis, security programs, face identification, chemical identification systems, and air quality analysis. A monitor, an input device, and an output device may be integrally formed with the second microserver. The subsystem microservers can be removed from a stored location. The subsystem microservers can connect to a network via hard wiring and/or through a wireless transceiver.

These and other aspects and features of the disclosure become more readily apparent upon reading the following detailed description when taken in conjunction with the accompanying drawings.

### BRIEF DESCRIPTION OF THE DRAWINGS

Fig. 1 is a schematic representation of an integrated system for monitoring, gathering and disseminating data about a structure in accordance with preferred embodiments of the present disclosure;

Fig. 2 is a perspective view of a gas turbine engine having a plurality of subsystem microservers with a communication link to a wireless network;

Fig. 3 is a microserver card having a wireless transceiver circuitry;

Fig. 4 is a schematic representation of an aircraft having a plurality of subsystem microservers connected to each passenger seat; and

Fig. 5 is a block diagram illustrating one embodiment of an integrated subsystem.

While the following disclosure is susceptible to various modifications and alternative constructions, certain illustrative embodiments thereof have been shown in the drawings and will be described below in detail. It should be understood, however, that there is no intention to limit the disclosure to the specific forms disclosed, but on the contrary, the intention is to cover all modifications, alternative constructions, and equivalents falling within the scope of the disclosure as defined by the appended claims.

### DETAILED DESCRIPTION OF THE DISCLOSURE

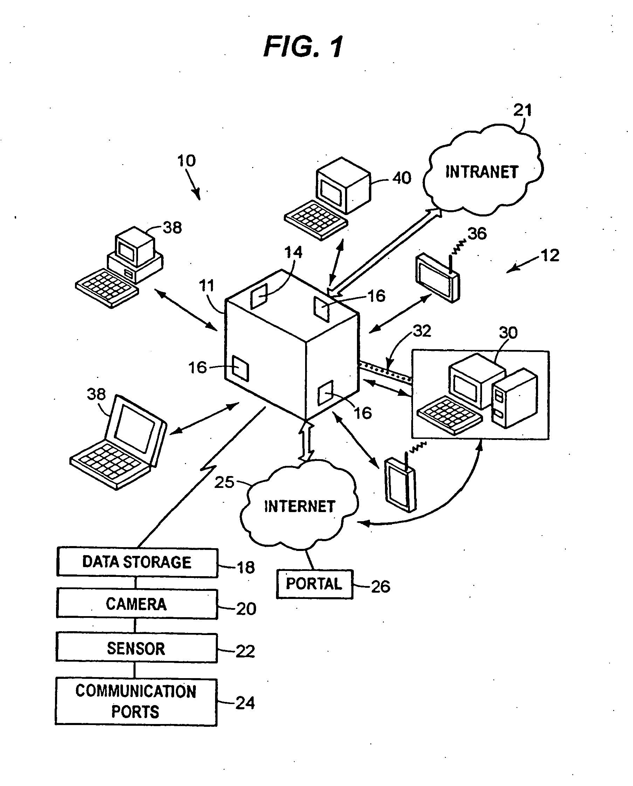

Referring now to FIG. 1, an integrated system 10 is presented which is capable of monitoring and gathering data about a structure 11, and disseminating the data to interested parties. The system 10 is also capable of restricting access to the data, and can accept data for storage or integration within the product itself, such as firmware revision updates. As used herein, the term "structure" has broad applicability and refers to any product, component, or system on a variety of machines including, but not limited to office buildings, manufacturing buildings, land based vehicles, sea faring vessels, aircraft, space craft, HVAC systems, elevator/escalator systems, propulsion systems on a vehicle, subsystems of a vehicle, and braking systems for a vehicle.

The system 10 can be integrated into any structure 11 as described above. The system 10 includes a server 12 having a master microserver 14 integrated with at least one subsystem microserver 16. The server 12 may monitor the condition of and/or gather data about the structure 11 in a number of ways. For example, the server 12 may be connected to or integrated with a vehicle data storage unit 18 which contains data about the structure 11. The server 12 may also be connected to a video camera 20, such as video web camera, to provide pictures, in real-time or on a delayed basis, of the structure 11. Still further, the server 12 may be connected to a number of sensors 22, such as a vibration sensor or a temperature sensor, which provide additional or environmental information about the condition of the structure 11.

The server 12 may be programmed in any suitable language known in the art to gather data about the structure 11 and present the data to interested parties in a desired format. For example, the server 12 may be used to host a web page which provides information about one or more structures 11 on a movable platform. The web page may have a menu which allows an interested party to gain access to gathered data about a particular structure 11. The data about the structure 11 may be organized on the server 12 and presented in any desirable format or manner. The server 12 may also be programmed to allow an interested party to carry out diagnostic operations on the structure 11 and/or to upgrade software associated with the structure 11. By providing the server 12 on the structure 11, a wireless system or intranet 21 is provided around the entire structure 11 enabling wireless communication to any electronic device thereon as will be described in further detail herein. The web page may have an IP address available for various Internet protocols including, but not limited to, HTTP, FTP, SMTP, UDP, ECHO, SSH, TELNET, NAMESERVER, BOOT PS, BOOT PC, TFTP, KERBEROS, POP3, NNTP, IMAP, SNMP, BGP, IMAP3, LDAP, and HTTPS.

While it is contemplated that the system 10 of the present disclosure would primarily be used to allow interested parties in remote locations to obtain information about a structure 11, there will be times when a mechanic or an engineer may want to interact with the server 12 while he or she is physically at the structure 11. To this end, the server 12 may be provided with a local USB or other communications port 24 for direct hook-up. A mechanic or engineer could then gain access to the server 12 by hooking up a laptop computer or another device such as a video borescope or a bar code reader to the communications port 24. Other examples of communication ports through which access may be gained to server 12 include wireless peer-to-peer communication links. The mechanic or engineer could then conduct a desired diagnostic operation or even fix a problem with the structure 11. Similarly, any passenger on board the structure 11 could use his or her own computer device to access the server 12 and thus the Internet 25, as will be described in further detail below.

The server 12 may comprise any suitable computer or processing unit known in the art. The server 12 may be a hand-held sized microserver using a Linux-based operating system or, may be a card adapted to be installed in a larger computer device. Further, the server 12 may be provided with its own web address, firewall, and security protocols known only to selected individuals, such as the manufacturer of the structure 11 or system 12.

In accordance with the present disclosure, the server 12 is capable of being accessed by interested parties via a portal 26 and the Internet or world wide web 25. To this end, the server 12 may have a communications device, such as a modem built within it to allow communication between the server 12 and the portal 26. The communication device may allow for radio frequency communications such as cellular communication, satellite communication, and/or wireless communication between the server 12 and the portal 26. In addition, communications between the server 12 and the portal 26 may be achieved by optical means such as an infrared link. The portal 26 is hosted by an external server which may be any suitable server known in the art. The server hosting the portal 26 also has appropriate communication means associated therewith to allow the portal 26 to gain access to and be accessed by the server 12.

Data gathered by and stored on the server 12 may be downloaded to the portal 26 as desired. For example, the server 12 may be programmed to periodically download data to the server hosting the portal 26 or to download data on specific events such as when an aircraft lands or when a truck or automobile reaches a particular destination. The server 12 may also download data to the portal 26 upon the activation of a switch by an operator onboard the structure 11. Alternatively, the portal server may upload data to the microserver, such as product firmware revisions or technical manuals for access by interested parties.

The portal 26 may be provided with a number of software tools called gadgets to automatically analyze, organize, and sort the data which has been received from the server 12. The data is preferably sorted so that different communities gain access to different portions of the data. For example, actual and potential customers of a vendor of a structure 11 may form one community and have access to certain data, while support engineers and product designers may form a second community and have access to another form of the data. As can be seen from the foregoing discussion, the portal 26 offers great flexibility as to how and to whom the data is disseminated. Still further, the portal 26 provides virtual shared spaces which allow for the common space posting and access of information about the structure 11 in a shared awareness between customers, support engineers, field operatives, and even product designers. The portal 26 may also be designed to provide chat rooms, bulletin boards, and on-line meeting capabilities where interested parties can communicate with each other.

One of the advantages to using the portal 26 is that its functionality can be carried out in a secure, user friendly, web-based environment. Members of a particular community can log in by presenting an identification and/or a password and gain access to current information about the structure 11. Another advantage to using the portal 26 is that it can be used to upload data, information, instructions, software, technical publications, diagnostic programs, etc. to the server 12. Thus, an engineer can perform diagnostic tests or repair the structure 11 from a remote location using the Internet. As the communication is two way, access, upload, download, and execution of all such information and data can be performed at the structure 11 or remote locations.

Access to the portal 26 may be gained in a number of different ways by a variety of devices as described below. For example, an interested party can communicate with the portal 26 through his/her personal computer 38 and the web browser on the computer 38. The computer 38 may be a PC workstation at an office of a user or a laptop or PC at the home of a user. Even a computer 40 in an Internet café may be used to gain access to the portal 26. A wireless PC tablet 36 on the shop floor of a manufacturer of the structure 11 may also be used to communicate with the portal 26. The portal 26 may also be in communication with the internal network 30 of the manufacturer of or a vendor of the structure 11. When the portal 26 is to be in communication with the network 30, a secure data pipe 32 may be used for crawlers for automated data exchange. If desired, the portal 26 may communicate with the internal network 30 via a wireless PDA.

The system 10 may also be configured to allow the internal network 30 to communicate directly with the server 12 via the Internet by dialing up the web address for the server 12. When in such a configuration, a firewall may be provided between the internal network 30 and the server 12.

The system 10 may also be used to check the status of a structure 11. For example, an operator of a fleet of airplanes having a network 30 may contact the server 12 on a particular airplane, either directly or through the portal 26, and learn the location of and the status of that airplane. Alternatively, a manufacturer of a jet engine may access the server 12 through its network, again either directly or through the portal 26, to ascertain the condition of a particular jet engine or a particular component on the jet engine to determine when that engine or component may require to servicing, and to collect data in determining product and fleet averages for improved product design and support. This can save the manufacturer unnecessary warranty, maintenance wear, and spare parts production costs.

One advantage to the system of the present disclosure is that it may be easily and cheaply installed into a vehicle. For example, the server 12 may be installed in the cabin of an aircraft, by using existing test ports already wired into the engine/airframe. Once installed, the server 12 generates a local wireless intranet in and around the structure 11 capable of operating in conjunction with, or independent from, the Internet. The microserver 12 can act as a coordinating server in communication with other computing devices, servers, and systems onboard the structure 11.

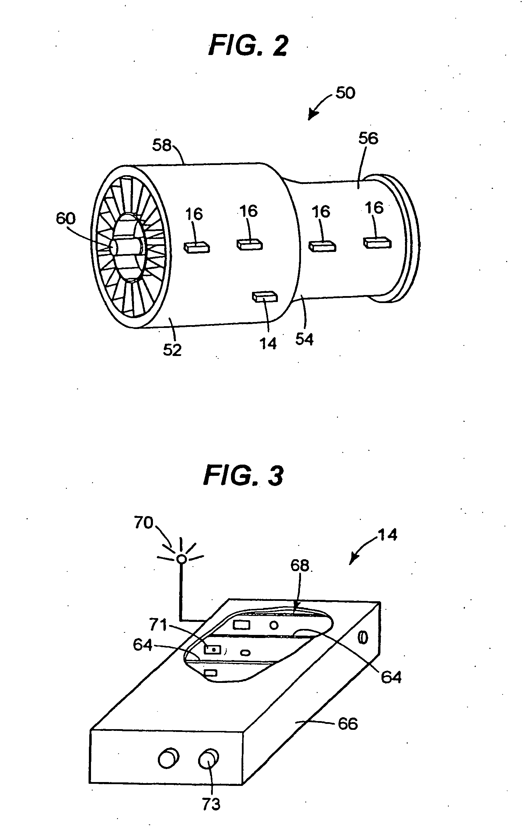

Referring to Fig. 2, an engine 50 of an aircraft is depicted, such as a gas turbine engine used for propulsion. In such an engine, a case 52 surrounds a compressor section 52, a combustion section 54, and a turbine section 56. As indicated above, at times it may be desirable to restrict access to data on the server. One example where this may be particular advantageous may be with respect to aircraft engines. Operation of the engine 50 is typically controlled and monitored by an electronic controller which can include a master microprocessor 14 and a plurality of subsystem microservers 16. The master microprocessor 14 can send and receive data to and from the subsystem microservers 16 by way of hardwired inputs, wireless inputs, RF ID tags and the like. The master microserver 14 can then use such data to calculate correctional signals to optimize operation, and transmit control signals back to the subsystems. Means for controlling the engine may employ any known technology, but generally performs as an electronic fuel control or injector taking power and throttle commands/signals from the cockpit and adjusting engine control to provide the desired power. The electronic control may include a plurality of cards or boards, including a motherboard, slidably mounted in a rack of the controller. The cards/boards receive inputs from the cockpit and various engine sensors, and outputs signals to various valves and controls of the engine to effectuate its operation.

As the software or algorithms used by the engine 50 may be proprietary, it is necessary to ensure such software is executed in a safe or closed capacity. With engines without wireless capability, it was relatively easy to protect propriety algorithms because a user had to be hardwired directly to the controller. However, as the present disclosure provides a master microserver 14 on the engine 50 and thus enables wireless communication with remote computing devices, the system 12 is provided with internal protection to prevent unauthorized access to the proprietary software.

Referring now to FIG. 3, a master microserver including a microserver card 64 is depicted as the mechanism by which such protection is accomplished. The microserver card 64 may be mounted directly within a master microserver 14 or in each subsystem microserver 16. The microserver card 64 includes a closed architecture section 66 and an open architecture section 68 connected by a high security connection 70. Engine control algorithms are processed by the closed architecture section 66 for operation of the engine 50, and only data processed or "cleaned" by the closed architecture section 66 is then communicated to the open architecture section 68 for access by interested parties.

To accomplish such functions, the closed architecture section 66 may include one or more processors 71 and one or more input/output devices 73. The closed architecture section 66 may include a smart signal conditioner having various microprocessors such as predictive maintenance chips or modules, diagnostic modules, compressor stall analysis modules, etc. which run proprietary, embedded engine-specific algorithms that process engine data received from engine sensors. The chips and modules are hard-coded into the smart signal conditioner so as to render their algorithms inaccessible to other operators, such as original equipment manufacturers (OEMs), with data access. The closed architecture section 66 can then feed calculated data and signals back into engine controller and other aircraft systems such as hydraulics, landing gear, flaps, and mission profile, for real-time mission adaptive processing and performance optimization.

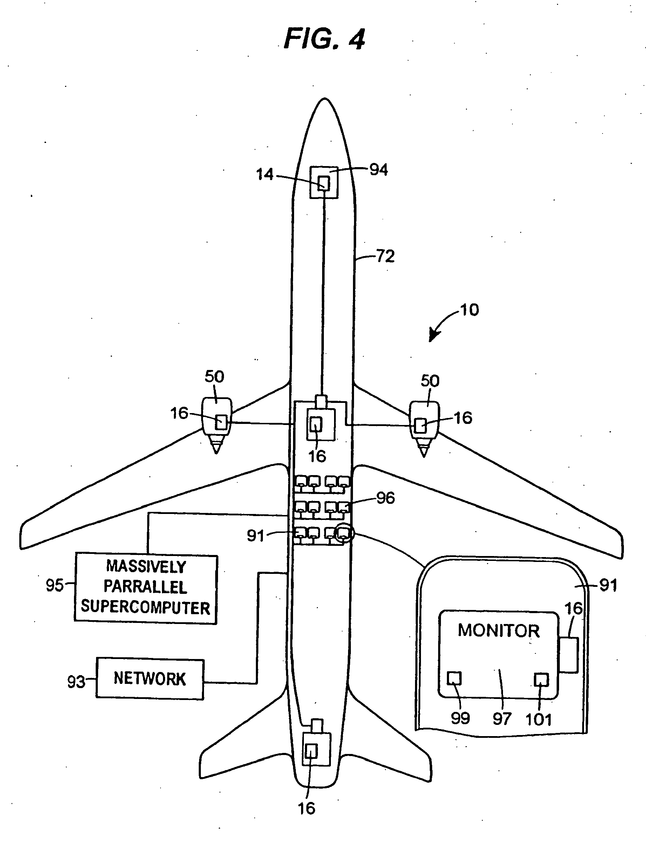

Referring now to Fig. 4, one embodiment illustrating the system 10 can include a remote integrated subsystem within an aircraft 72. The aircraft 72 includes a crew 94 and a plurality of passenger seats 91 for transporting passengers 96 during flight. Each passenger seat 91 can include a subsystem microserver 16 connected to a monitor 97. The monitor 97 can be positioned on the back side of each seat 91 so that the monitor 97 can be viewed by the passengers 96 while in a seated position. Optionally, the monitor 97 and subsystem microservers 16 can be removed from the seat to permit the passengers 96 to hold the monitor 97 and subsystem microserver 16 on their laps during flight. The subsystem microserver 16 also includes an input device 99 and an output device 101 that will permit a passenger 96 to enter or receive electronic data.

Each subsystem microserver 16 can be linked together to a network 93 and controlled conjunctively to form a massively parallel supercomputer 95. The supercomputer 95 can be used for computationally intensive applications such as weather predictions, collision avoidance radar, engine diagnostics, or security related processes such as terrorist face identification, chemical identification systems, and air quality analysis. The network 93 can be accessed through a secured Intranet system as well as through an open system such as the internet or world wide web. The passengers 96 can access e-mail, entertainment systems, or other applications as desired. A subsystem microsever 16 can be connected to a master microserver 14 which coordinates access to the subsystem microserver 16 and can control each individual subsystem microserver 16. The master microserver 14 acts as a primary coordinator and processor of data to and from the subsystem microservers 16 for creating external access and managing a communication link to the outside world. The network 93 can be accessed through telecommunications infrastructures such as wireless satellite, global telecommunication networks such as the internet, a secured terminal, private internet, or private network. Direct access to each subsystem microserver 16 is also possible through hardwired connections.

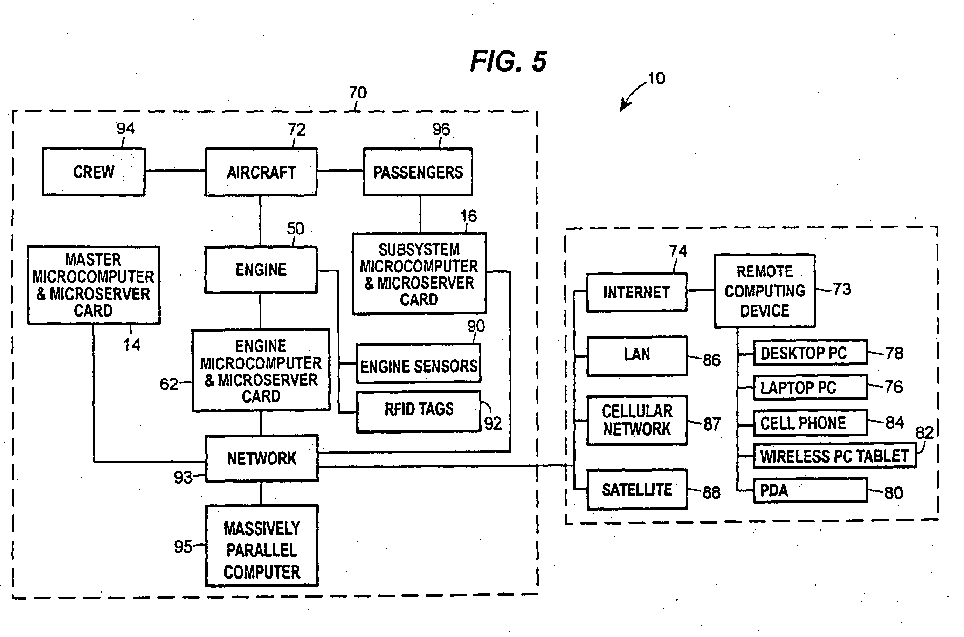

Referring now to Fig. 5, a schematic representation of one embodiment of the communication system 10 is illustrated. While it may be desirable to prevent certain proprietary algorithms and data from being accessed, certain data which has been processed so as to prevent the algorithms from being reversed engineered or the like, may be advantageously accessed by outside, remote users. As with the microserver 12, referenced above, the master microserver 14 generates a wireless system or intranet about the aircraft 72 or engine 50 enabling communication with the Internet as by a local area network (LAN) 86, cellular network 87, or satellite 88. The system 10, for example, may host a webpage enabling remote computing devices 73 to log into the webpage by way of the Internet 74 and receive the processed data.

Any number of remote computing devices may be employed such as, but not limited to, laptop computers 76, desktop computers 78, personal digital assistants 80, wireless PC tablets 82, and cellular phones 84. In doing so, a user in a location remote from the airborne aircraft, can gain access to certain aircraft system or aircraft engine data while maintaining the proprietary nature of certain algorithms. The aircraft 72 and engine 50 are able to provide secured access through the use of a dual architecture card 64 and its smart signal conditioner and high security communicator link 70 between the open architecture section 68 and closed architecture section 66 as described above.

The integrated system 10 includes a network 93 linked to both master microserver 14 and subsystem microservers 16, to provide remote access and control of the integrated system 10. A remote computing device 73 can be used to access one or more of the Internet 74, LAN 86, cellular network 87, or satellite 88 devices. The network 93 links the master microserver 14 and the subsystem microservers 16 together to form a massively parallel supercomputer 95, such that a user from a remote location can request that the supercomputer 95 perform computationally intensive calculations for such things as weather prediction, collision avoidance systems, chemical analysis, and biological air quality analysis as described previously.

From the foregoing, one of ordinary skill in the art will recognize the teachings of the disclosure can enable remote access to certain real-time data of a structure 11 while still protecting certain other data or software of the structure 11 from being remotely accessed. While the system has been described with reference to aircraft and aircraft engines, it is to be understood that it could be used on any other form of structure 11 as defined herein above.

## Claims

1. A communication system for use in controlling the operation of an engine of an aircraft, comprising:
a master microserver (14);
at least one subsystem microserver (16) having a subsystem microserver card; and
a remotely accessible communication network formed between the master microserver (14) and the at least one subsystem microserver (16) for providing a real time closed feedback communication loop between the master microserver (14) and the at least one subsystem microserver (16);
the communication system being **characterised in that**:
the master microserver (14) is arranged: to receive data from the at least one subsystem microserver (16); to use at least one engine control algorithm to calculate correctional signals to optimise the operation of the engine from the received data; and to send said correctional signals to the at least one subsystem microserver (16); and
the master microserver (14) comprises a master microserver card (64) that includes a closed architecture section (66) and an open architecture section (68) connected by a high security connection (70), the system being arranged to prevent unauthorised access to said at least one engine control algorithm, and the open architecture section (68) being arranged to receive data processed by the closed architecture section (66) and allow access to said processed data by interested parties.

2. The communication system of claim 1, wherein the system is scalable by increasing or decreasing the number of subsystem microservers (16).

3. The communication system of claim 1 or 2, wherein the network is connectable to the world wide web.

4. The communication system of any preceding claim, wherein the network communicates through TCP/IP.

5. The communication system of any preceding claim, wherein the subsystem microservers (16) are operable for communicating with one another.

6. The communication system of any preceding claim, wherein the feedback communication loop uses a world wide web interface to communicate with the embedded software in each microserver (14,16).

7. The communication system of any preceding claim, wherein the master microserver (14) controls electronic access between the communication network and an external system.

8. The communication system of any preceding claim, wherein the master microserver (14) hosts onboard workstation applications for data processing.

9. The communication system of any preceding claim, wherein the master microserver (14) provides access to an Internet homepage.

10. The communication system of claim 9, wherein home page is accessible from a remote location.

11. The communication system of claim 9 or 10, wherein the homepage is accessible from any one of the subsystem microservers (16).

12. The communication system of any preceding claim, wherein the system is accessible with at least one of a wireless tablet (82), wireless telephone (84), satellite (88), PDA (80), or hardwired device.

13. The communication system of claim 12, wherein access to the system includes means for at least one of diagnosing system problems, retrieving data, processing data, storing service data, storing historical data, and retrieving technical repair information.

14. The communication system of any preceding claim, wherein the master microserver (14) and subsystem microservers (16) are accessible for personal communications.

15. The communication system of claim 14, wherein the personal communication includes audio communication, video communication, and entertainment.

16. The communication system of any preceding claim, wherein the communication system is located on a gas turbine engine (50).

17. The communication system of any preceding claim, wherein the communication system is located in an aircraft (72).

18. The communication system of claim 17, wherein each seat (91) of the aircraft includes a subsystem microprocessor.

19. An aircraft (72) having an electronic communications system, comprising:
a master microserver (14);
first and second subsystem microservers (16), each having a subsystem microserver card, and wherein the second subsystem microserver (16) is accessible by a passenger (96) in the aircraft; and
a remotely accessible network connecting the master microserver (14) and the subsystem microservers (16) together for providing a real time closed feedback communication loop between the master microserver (14) and the subsystem microservers (16);
the aircraft being **characterised in that**:
the master microserver (14) is arranged: to receive data from the first subsystem microserver (16); to use at least one engine control algorithm to calculate correctional signals to optimise the operation of the engine from the received data; and to send said correctional signals to the first subsystem microserver (16); and
the master microserver (14) comprises a master microserver card (64) that includes a closed architecture section (66) and an open architecture section (68) connected by a high security connection (70), the system being arranged to prevent unauthorised access to said at least one engine control algorithm, and the open architecture section (68) being arranged to receive data processed by the closed architecture section (66) and allow access to said processed data by interested parties.

20. The aircraft of claim 19, wherein the second subsystem microserver (16) is connected to an aircraft passenger seat (91).

21. The aircraft of claim 19 or 20, wherein the network includes wireless communication access.

22. The aircraft of any of claims 19 to 21, wherein the second subsystem microserver (16) is detachable from the aircraft (72) for permitting a passenger (91) to hold the subsystem microserver.

23. The aircraft of any of claims 19 to 22, wherein each subsystem microserver (16) is hard wired to the network.

24. The aircraft of any claims 19 to 23, wherein each subsystem microserver (16) communicates with the network through wireless transmissions.

25. The aircraft of any of claims 19 to 24, wherein the second subsystem microserver (16) includes at least one of an input device (99), an output device (101), and a monitor (97).

## Patentansprüche

1. Kommunikationssystem zur Verwendung beim Steuern des Betriebs eines Triebwerks eines Luftfahrzeugs, aufweisend:
einen Master-Mikroserver (14);
mindestens einen Subsystem-Mikroserver (16) mit einer Subsystem-Mikroserver-Karte; und
ein Kommunikationsnetzwerk, auf das entfernt zugegriffen werden kann,
welches zwischen dem Master-Mikroserver (14) und dem mindestens einen Subsystem-Mikroserver (16) zum Bereitstellen einer geschlossenen Realzeit-Rückkopplungskommunikationsschleife zwischen dem Master-Mikroserver (14) und dem mindestens einen Subsystem-Mikroserver (16) gebildet ist;
wobei das Kommunikationssystem **dadurch gekennzeichnet ist, dass**:
der Master-Mikroserver (14) eingerichtet ist: Daten von dem mindestens einen Subsystem-Mikroserver (16) zu empfangen; mindestens einen Triebwerk-Steuer-Algorithmus zu verwenden, um Korrektursignale zu berechnen, um den Betrieb des Triebwerks aus den empfangenen Daten zu optimieren; und die Korrektursignale zu dem mindestens einen Subsystem-Mikroserver (16) zu senden; und dass
der Master-Mikroserver (14) eine Master-Mikroserver-Karte (64) aufweist, die einen Bereich geschlossener Architektur (66) und einen Bereich offener Architektur (68) enthält, die durch eine Hochsicherheitsverbindung (70) verbunden sind, wobei das System eingerichtet ist, unauthorisierten Zugang zu dem mindestens einen Triebwerk-Steuer-Algorithmus zu verhindern, und wobei der Bereich offener Architektur (68) eingerichtet ist, Daten, die von dem Bereich geschlossener Architektur (66) verarbeitet sind, zu empfangen und Zugriff auf die verarbeiteten Daten durch interessierte Parteien zu erlauben.

2. Kommunikationssystem nach Anspruch 1, wobei das System durch Erhöhen oder Vermindern der Anzahl von Subsystem-Mikroservern (16) skalierbar ist.

3. Kommunikationssystem nach Anspruch 1 oder 2, wobei das Netzwerk mit dem weltweiten Netz ("world wide web") verbindbar ist.

4. Kommunikationssystem nach einem der vorhergehenden Ansprüche, wobei das Netzwerk über TCP/IP kommuniziert.

5. Kommunikationssystem nach einem der vorhergehenden Ansprüche, wobei die Subsystem-Mikroserver (16) betriebsmäßig zur Kommunkation miteinander imstande sind.

6. Kommunikationssystem nach einem der vorhergehenden Ansprüche, wobei die Rückkopplungskommunikationsschleife eine World-Wide-Web-Schnittstelle benutzt, um mit der eingebetteten Software in jedem Mikroserver (14, 16) zu kommunizieren.

7. Kommunikationssystem nach einem der vorhergehenden Ansprüche, wobei der Master-Mikroserver (14) elektronischen Zugriff zwischen dem Kommunikationsnetzwerk und einem externen System steuert.

8. Kommunikationssystem nach einem der vorhergehenden Ansprüche, wobei der Master-Mikroserver (14) Workstation-Anwendungen an Bord zur Datenverarbeitung betreibt.

9. Kommunikationssystem nach einem der vorhergehenden Ansprüche, wobei der Master-Mikroserver (14) Zugriff auf eine Internet-Homepage bereitstellt.

10. Kommunikationssystem nach Anspruch 9, wobei auf die Homepage von einem entfernten Ort zugegriffen werden kann.

11. Kommunikationssystem nach Anspruch 9 oder 10, wobei auf die Homepage von jedem der Subsystem-Mikroserver (16) zugegriffen werden kann.

12. Kommunikationssystem nach einem der vorhergehenden Ansprüche, wobei das System mit mindestens einem von einem drahtlosen Tablett (82), einem drahtlosen Telephon (84), einem Satelliten (88), einem PDA (80) oder einem drahtgebundenen Gerät zugänglich ist.

13. Kommunikationssystem nach Anspruch 12, wobei der Zugang zu dem System Mittel für mindestens eines von Diagnostizieren von Systemproblemen, Abrufen von Daten, Verarbeiten von Daten, Speichern von Service-Daten, Speichern von historischen Daten und Abrufen von technischer Reparatur-Information enthält.

14. Kommunikationssystem nach einem der vorhergehenden Ansprüche, wobei der Master-Mikroserver (14) und die Subsystem-Mikroserver (16) für persönliche Kommunikation zugänglich sind.

15. Kommunikationssystem nach Anspruch 14, wobei die persönliche Kommunikation Audio-Kommunikation, Video-Kommunikation und Unterhaltung enthält.

16. Kommunikationssystem nach einem der vorhergehenden Ansprüche, wobei das Kommunikationssystem an einer Gasturbinenmaschine (50) positioniert ist.

17. Kommunikationssystem nach einem der vorhergehenden Ansprüche, wobei das Kommunikationssystem in einem Luftfahrzeug (72) positioniert ist.

18. Kommunikationssystem nach Anspruch 17, wobei jeder Sitz (91) des Luftfahrzeugs einen Subsystem- Mikroprozessor enthält.

19. Luftfahrzeug (72) mit einem elektronischen Kommunikationssystem, aufweisend:
einen Master-Mikroserver (14);
einen ersten und einen zweiten Subsystem-Mikroserver (16), von denen jeder eine Subsystem-Mikroserver-Karte hat, wobei der zweite Subsystem-Mikroserver (16) von einem Passagier (96) in dem Luftfahrzeug zugänglich ist; und
ein Netzwerk, auf das entfernt zugegriffen werden kann, welches den Master-Mikroserver (14) und die Subsystem-Mikroserver (16) zum Bereitstellen einer geschlossenen Realzeit-Rückkopplungskommunikationsschleife zwischen dem Master-Mikroserver (14) und den Subsystem-Mikroservern (16) verbindet;
wobei das Luftfahrzeug **dadurch gekennzeichnet ist, dass**:
der Master-Mikroserver (14) eingerichtet ist: Daten von dem ersten Subsystem-Mikroserver (16) zu empfangen; mindestens einen Triebwerk-Steuer-Algorithmus zu verwenden, um Korrektursignale zu berechnen, um den Betrieb des Triebwerks aus den empfangenen Daten zu optimieren; und die Korrektursignale zu dem ersten Subsystem-Mikroserver (16) zu senden; und
der Master-Mikroserver (14) eine Master-Mikroserver-Karte (64) aufweist, die einen Bereich geschlossener Architektur (66) und einen Bereich offener Architektur (68) enthält, die durch eine Hochsicherheitsverbindung (70) verbunden sind, wobei das System eingerichtet ist, unauthorisierten Zugriff zu dem mindestens einen Triebwerk-Steuer-Algorithmus zu verhindern, und wobei der Bereich offener Architektur (68) eingerichtet ist, Daten, die durch den Bereich geschlossener Architektur (66) verarbeitet sind, zu empfangen und Zugriff auf die verarbeiteten Daten durch interessierte Parteien zu erlauben.

20. Luftfahrzeug nach Anspruch 19, wobei der zweite Subsystem-Mikroserver (16) mit einem Luftfahrzeugpassagiersitz (91) verbunden ist.

21. Luftfahrzeug nach Anspruch 19 oder 20, wobei das Netzwerk einen drahtlosen Kommunikationszugang enthält.

22. Luftfahrzeug nach einem der Ansprüche 19 bis 21, wobei der zweite Subsystem-Mikroserver (16) von dem Luftfahrzeug (72) abnehmbar ist, um einem Passagier (91) zu erlauben, den Subsystem-Mikroserver zu halten.

23. Luftfahrzeug nach einem der Ansprüche 19 bis 22, wobei jeder Subsystem-Mikroserver (16) mit dem Netzwerk drahtverbunden ist.

24. Luftfahrzeug nach einem der Ansprüche 19 bis 23, wobei jeder Subsystem-Mikroserver (16) mit dem Netzwerk über drahtlose Übertragungen kommuniziert.

25. Luftfahrzeug nach einem der Ansprüche 19 bis 24, wobei der zweite Subsystem-Mikroserver (16) mindestens eines von einer Eingabe-Einrichtung (99), einer Ausgabe-Einrichtung (101) und einem Monitor (97) enthält.

## Revendications

1. Système de communications destiné à être utilisé pour commander le fonctionnement d'un moteur d'un aéronef, comprenant :
un microserveur principal (14) ;
au moins un microserveur (16) de sous-système doté d'une carte de microserveur de sous-système ; et
un réseau de communications accessible à distance formé entre le microserveur principal (14) et ledit au moins un microserveur (16) de sous-système pour établir une boucle de communications de retour en circuit fermé en temps réel entre le microserveur principal (14) et ledit au moins un microserveur (16) de sous-système ;
le système de communications étant **caractérisé en ce que** :
le microserveur principal (14) est conçu pour : recevoir des données dudit au moins un microserveur (16) de sous-système ; utiliser au moins un algorithme de commande de moteur pour calculer des signaux de correction visant à optimiser le fonctionnement du moteur à partir des données reçues ; et transmettre lesdits signaux de correction audit au moins un microserveur (16) de sous-système ; et
le microserveur principal (14) comprend une carte (64) de microserveur principal comportant une partie d'architecture fermée (66) et une partie d'architecture ouverte (68) reliées par une liaison haute sécurité (70), le système étant conçu pour empêcher l'accès non autorisé audit au moins un algorithme de commande de moteur, et la partie d'architecture ouverte (68) étant conçue pour recevoir des données traitées par la partie d'architecture fermée (66) et permettre l'accès auxdites données traitées par des parties intéressées.

2. Système de communications selon la revendication 1, le système étant évolutif par augmentation ou réduction du nombre de microserveurs (16) de sous-système.

3. Système de communications selon la revendication 1 ou 2, le réseau étant apte à être relié au Web.

4. Système de communications selon l'une quelconque des revendications précédentes, le réseau communiquant au moyen du protocole TCP/IP.

5. Système de communications selon l'une quelconque des revendications précédentes, les microserveurs (16) de sous-système étant aptes à communiquer les uns avec les autres.

6. Système de communications selon l'une quelconque des revendications précédentes, la boucle de communications de retour utilisant une interface Web pour communiquer avec le logiciel intégré dans chaque microserveur (14, 16).

7. Système de communications selon l'une quelconque des revendications précédentes, le microserveur principal (14) commandant l'accès électronique entre le réseau de communications et un système externe.

8. Système de communications selon l'une quelconque des revendications précédentes, le microserveur principal (14) hébergeant des applications de poste de travail embarquées permettant le traitement de données.

9. Système de communications selon l'une quelconque des revendications précédentes, le microserveur principal (14) donnant accès à une page d'accueil Internet.

10. Système de communications selon la revendication 9, la page d'accueil étant accessible à distance.

11. Système de communications selon la revendication 9 ou 10, la page d'accueil étant accessible de l'un quelconque des microserveurs (16) de sous-système.

12. Système de communications selon l'une quelconque des revendications précédentes, accessible par une tablette sans fil (82) et/ou par un téléphone sans fil (84) et/ou par satellite (88) et/ou par un assistant numérique PDA (80) et/ou par un dispositif câblé.

13. Système de communications selon la revendication 12, l'accès au système comprenant des moyens de diagnostic de problèmes affectant le système et/ou d'extraction de données et/ou de traitement de données et/ou d'enregistrement de données d'entretien et/ou d'enregistrement de données historiques et/ou d'extraction d'informations de réparations techniques.

14. Système de communications selon l'une quelconque des revendications précédentes, le microserveur principal (14) et les microserveurs (16) de sous-système étant accessibles pour les communications personnelles.

15. Système de communications selon la revendication 14, les communications personnelles comprenant des communications audio, des communications vidéo et du divertissement.

16. Système de communications selon l'une quelconque des revendications précédentes, le système de communications étant mis en place sur un turbomoteur (50).

17. Système de communications selon l'une quelconque des revendications précédentes, le système de communications étant mis en place dans un aéronef (72).

18. Système de communications selon la revendication 17, chaque siège (91) de l'aéronef comportant un microprocesseur de sous-système.

19. Aéronef (72) doté d'un système de communications électronique, comprenant :
un microserveur principal (14) ;
des premier et deuxième microserveurs (16) de sous-système dotés chacun d'une carte de microserveur de sous-système, le deuxième microserveur (16) de sous-système étant accessible par un passager (96) dans l'aéronef ; et
un réseau accessible à distance reliant le microserveur principal (14) et les microserveurs (16) de sous-système pour établir une boucle de communications de retour en circuit fermé en temps réel entre le microserveur principal (14) et les microserveurs (16) de sous-système ;
l'aéronef étant **caractérisé en ce que** :
le microserveur principal (14) est conçu pour : recevoir des données du premier microserveur (16) de sous-système ; utiliser au moins un algorithme de commande de moteur pour calculer des signaux de correction visant à optimiser le fonctionnement du moteur à partir des données reçues ; et transmettre lesdits signaux de correction au premier microserveur (16) de sous-système ; et
le microserveur principal (14) comprend une carte (64) de microserveur principal comportant une partie d'architecture fermée (66) et une partie d'architecture ouverte (68) reliées par une liaison haute sécurité (70), le système étant conçu pour empêcher l'accès non autorisé audit au moins un algorithme de commande de moteur, et la partie d'architecture ouverte (68) étant conçue pour recevoir des données traitées par la partie d'architecture fermée (66) et permettre l'accès auxdites données traitées par des parties intéressées.

20. Aéronef selon la revendication 19, le deuxième microserveur (16) de sous-système étant relié à un siège passager (91) de l'aéronef.

21. Aéronef selon la revendication 19 ou 20, le réseau comportant un accès de communications sans fil.

22. Aéronef selon l'une quelconque des revendications 19 à 21, le deuxième microserveur (16) de sous-système étant détachable de l'aéronef (72) pour permettre à un passager (91) de le tenir.

23. Aéronef selon l'une quelconque des revendications 19 à 22, chaque microserveur (16) de sous-système étant câblé au réseau.

24. Aéronef selon l'une quelconque des revendications 19 à 23, chaque microserveur (16) de sous-système communiquant avec le réseau par des transmissions sans fil.

25. Aéronef selon l'une quelconque des revendications 19 à 24, le deuxième microserveur (16) de sous-système comportant un dispositif d'entrée (99) et/ou un dispositif de sortie (101) et/ou un écran d'affichage (97).
